# EUROPEAN PATENT SPECIFICATION

(11) **EP 3 393 723 B1**
(45) Date of publication and mention of the grant of the patent: **18.11.2020**
(21) Application number: 15911049.3
(22) Date of filing: 22.12.2015
(51) Int. Cl.: B25F 3/00, B25F 5/00

(54) **AN ATTACHMENT FOR A POWER TOOL, A POWER TOOL AND A METHOD OF OPERATING A POWER TOOL**
BEFESTIGUNG FÜR EIN ELEKTROWERKZEUG, ELEKTROWERKZEUG UND VERFAHREN ZUM BETREIBEN EINES ELEKTROWERKZEUGS
FIXATION POUR OUTIL ÉLECTRIQUE, OUTIL ÉLECTRIQUE ET PROCÉDÉ DE FONCTIONNEMENT D'UN OUTIL ÉLECTRIQUE

(43) Date of publication of application: 31.10.2018
(73) Proprietor: TTI (Macao Commercial Offshore) Limited, Macao (MO)
(72) Inventor: LAM, Chin Lung, Hong Kong (CN); WANG, Yulong, Dongguan Guangdong 523960 (CN); ZHONG, Ruifeng, Dongguan Guangdong 523960 (CN); HAHN, Klaus Karl, Henley-on-Thames Oxfordshire RG9 1BE (GB)
(74) Representative: Grünecker Patent- und Rechtsanwälte PartG mbB
(86) International application number: PCT/CN2015/098235
(87) International publication number: WO 2017/107050

(56) References cited:
- EP-A2- 0 189 807
- EP-A2- 2 030 710
- WO-A1-2008/057023
- WO-A1-2015/161721
- CN-A- 103 963 023
- CN-U- 203 831 361
- CN-U- 203 831 362
- US-A1- 2010 032 179
- US-A1- 2011 203 819
- US-A1- 2014 070 924

## Description

### TECHNICAL FIELD

The present invention relates to an attachment for a power tool according to the preamble of claim 1, a power tool and a method of operating a power tool, and particularly, although not exclusively, to a power tool adapted to operate with different operating units having a smart attachment.

An attachment according to the preamble of claim 1 is known from WO2015/161721 A1.

### BACKGROUND

There is a large variety of power tools that are available to users. Many of these tools operate with electrically or other power source (e.g. gasoline engines) and will include a specific working head to perform the work as intended. In some examples, different power tools with similar output power may share the same power module, such that a wide range of power tool with different operating components may share a limited number of power modules or batteries. The maintenance cost may be effectively lower, and the space required for storage of these power tools is substantially reduced.

However, different power tool may operate differently due to the different structures and operation modes. For example, some of the different operating components may require a higher power output of the power module while some of the operating component may require smaller and more stable power output for precise operation. The power module may be implemented with different operation profiles for different operating modes for each of the different compatible operating components.

### SUMMARY OF THE INVENTION

In accordance with a first aspect of the present invention, there is provided an attachment according to claim 1, for a power tool comprising an electrical arrangement associated with at least one of a plurality of operating components adapted to cooperate with a power unit of the power tool, wherein the power unit is arranged to detect the electrical arrangement so as to identify the at least one of the plurality of operating components attached thereto.

In an embodiment of the first aspect, the electrical arrangement is provided on the at least one of the plurality of operating components.

The electrical arrangement is arranged to electrically couple to the power unit.

The electrical arrangement comprises at least one electrical component.

In an embodiment of the first aspect, the power unit is arranged to identify the at least one of the plurality of operating components by processing an electrical parameter of each of the at least one electrical component electrically couple thereto.

In an embodiment of the first aspect, the electrical parameter includes a resistance value of the at least one electrical component.

In an embodiment not according to the invention, the at least one electrical component includes at least one resistor.

The at least one electrical component includes at least one electric switch.

In an embodiment of the first aspect, further comprising a plurality of connection terminals arranged to electrically connect the electrical arrangement to the power unit.

In an embodiment of the first aspect, further comprising an attachment body arranged to accommodate the electrical arrangement.

In an embodiment of the first aspect, the attachment body is further arranged to be physically coupled to the at least one of the plurality of operating components.

In an embodiment of the first aspect, the power unit is further arranged to deliver an electrical power to the at least one of the operating components according to at least one predetermined operating profile.

In an embodiment of the first aspect, wherein when the power unit obtain an identification result based on processing the electrical arrangement, the at least one predetermined operating profile is selected according to the identification result obtained.

In an embodiment of the first aspect, the at least one predetermined operating profile is manually selected by a user of the power tool.

In an embodiment of the first aspect, further comprises the at least one of the plurality of operating components.

In accordance with a second aspect of the present invention, there is provided a power tool according to claim 9, comprising an attachment having an electrical arrangement associated with at least one of a plurality of operating components adapted to cooperate with a power unit of the power tool, wherein the power unit is arranged to detect the electrical arrangement so as to identify the at least one of the plurality of operating components attached thereto.

In an embodiment of the second aspect, the electrical arrangement is provided on the at least one of the plurality of operating components.

The electrical arrangement is arranged to electrically couple to the power unit.

The electrical arrangement comprises at least one electrical component.

In an embodiment of the second aspect, the power unit is arranged to identify the at least one of the plurality of operating components by processing an electrical parameter of each of the at least one electrical component electrically couple thereto.

In an embodiment of the second aspect, the electrical parameter includes a resistance value of the at least one electrical component.

In an embodiment not according to the invention, the at least one electrical component includes at least one resistor.

The at least one electrical component includes at least one electric switch.

In an embodiment of the second aspect, the attachment further comprises a plurality of connection terminals arranged to electrically connect the electrical arrangement to the power unit.

In an embodiment of the second aspect, the attachment further comprises an attachment body arranged to accommodate the electrical arrangement.

In an embodiment of the second aspect, the attachment body is further arranged to be physically coupled to the at least one of the plurality of operating components.

In an embodiment of the second aspect, the power unit is further arranged to deliver an electrical power to the at least one of the operating components according to at least one predetermined operating profile.

In an embodiment of the second aspect, wherein when the power unit obtain an identification result based on processing the electrical arrangement, the at least one predetermined operating profile is selected according to the identification result obtained.

In an embodiment of the second aspect, wherein the at least one predetermined operating profile is manually selected by a user of the power tool.

In an embodiment of the second aspect, the attachment further comprises the at least one of the plurality of operating components.

In an embodiment of the second aspect, the power tool is an electrical gardening tool.

In an embodiment of the second aspect, the power tool includes at least one of a hedge trimmer, a line trimmer, an edger, a brush cutter, a pruner, a blower and a cultivator.

In accordance with a third aspect, there is provided a method of operating a power tool comprising the steps of: detecting an electrical arrangement associated with at least one of a plurality of operating components adapted to cooperate with a power unit of the power tool; and identifying the at least one of the plurality of operating components attached to the power unit.

In an embodiment of the third aspect, further comprising the step of identifying the at least one of the plurality of operating components by processing an electrical parameter of each of the at least one electrical component of the electrical arrangement electrically coupled to the power unit.

In an embodiment of the third aspect, the electrical parameter includes a resistance value of the at least one electrical component.

In an embodiment of the third aspect, further comprising the step of identifying the at least one of the plurality of operating components by processing a state of each of the at least one electrical component of the electrical arrangement electrically coupled to the power unit, wherein the at least one electrical component includes at least one electric switch.

In an embodiment of the third aspect, further comprising the step of delivering an electrical power to the at least one of the operating components according to at least one predetermined operating profile.

In an embodiment of the third aspect, further comprising the steps of: obtaining an identification result based on processing the electrical arrangement; and selecting the at least one predetermined operating profile according to the identification result obtained.

In an embodiment of the third aspect, further comprising the step of delivering the electrical power to the at least one of the operating components according to at least one of the predetermined operating profile manually selected by a user of the power tool.

### BRIEF DESCRIPTION OF THE DRAWINGS

Embodiments of the present invention will now be described, by way of example, with reference to the accompanying drawings in which:
Figure 1 is a side view of a power tool and an attachment for use in the power tool in accordance with one embodiment of the present invention;
Figure 2 is an illustration of the operation of the attachment of Figure 1;
Figure 3 is a perspective view of the attachment of Figure 1;
Figure 4 is a perspective view of the adapter arranged to couple with the attachment of Figure 3;
Figure 5 is a perspective view of the power tool of Figure 1;
Figure 6 is a front view of the power tool of Figure 1;
Figure 7 is a front view of a portion of the power tool of Figure 1 and a plurality of different attachments arranged to represent different operating units of the power tool;
Figure 8A is a schematic diagram showing a power unit of the power tool of Figure 1 in a first configuration without a first auxiliary handled mounted to the power unit;
Figure 8B is a schematic diagram showing a power unit of the power tool of Figure 1 in a second configuration with an auxiliary handled mounted to the power unit;
Figure 8C is an illustration of the power tool of Figure 1 in the second configuration of Figure 8B;
Figure 8D is a schematic diagram showing a power unit of the power tool of Figure 1 in a third configuration with a second auxiliary handled mounted to the power unit with an external connector;
Figure 8E is an illustration of the power tool of Figure 1 in the third configuration of Figure 8D;
Figure 9 is a perspective view of a power tool in accordance with one embodiment of the present invention;
Figure 10A is a front view of an attachment for use in the power tool of Figure 9, wherein the operating component is attached to the power unit of the power tool;
Figure 10B is a front view of the attachment in Figure 10A, wherein the operating component is detached from the power unit of the power tool;
Figure 11A is a perspective view of a female connector of the attachment in Figure 10A with an electrical arrangement in a first configuration and a perspective view of a portion of the power tool displaying a first type of operating component being detected by the power unit;
Figure 11B is a perspective view of a female connector of the attachment in Figure 10A with an electrical arrangement in a second configuration and a perspective view of a portion of the power tool displaying a second type of operating component being detected by the power unit;
Figure 11C is a perspective view of a female connector of the attachment in Figure 10A with an electrical arrangement in a third configuration and a perspective view of a portion of the power tool displaying a third type of operating component being detected by the power unit;
Figure 12 is a perspective view of a male connector of the attachment in Figure 10A with electrical connectors arranged to connect with the electrical pins in the female connectors in Figures 11A - 11C;
Figure 13A is a perspective view of the power tool of Figure 9 with an auxiliary handle mounted to the power unit;
Figure 13B is a perspective view of the power tool of Figure 9 with a different auxiliary handle mounted to the power unit;
Figure 14 is an enlarged portion of the perspective view of Figure 13A showing the handle connector structure of the power unit; and
Figure 15 is a perspective view of a power tool in accordance with one embodiment of the present invention.

### DETAILED DESCRIPTION OF THE PREFERRED EMBODIMENT

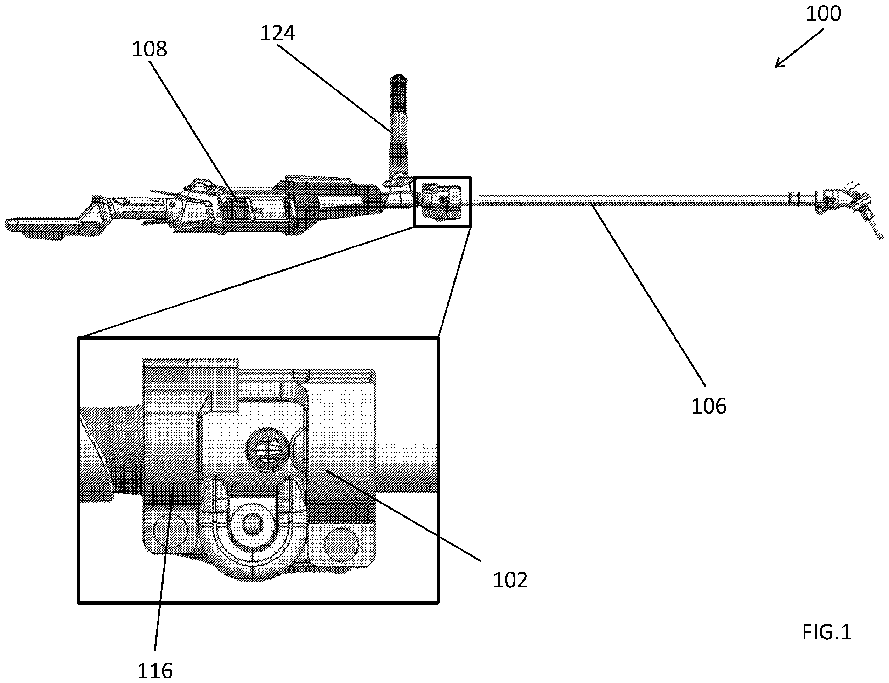

With reference to Figure 1, there is provided a power tool 100 comprising an attachment 102 having an electrical arrangement 104 associated with at least one of a plurality of operating components 106 adapted to cooperate with a power unit 108 of the power tool 100, wherein the power unit 108 is arranged to detect the electrical arrangement 104 so as to identify the at least one of the plurality of operating components 106 attached thereto.

In this embodiment, the power tool 100 comprises substantially an operating component 106 detachably mounted or coupled to a power unit 108. By attaching different types of operating component 106, the power tool 100 may operate as different gardening tools such as but not limited to a hedge trimmer, a line trimmer, an edger, a brush cutter, a pruner, a blower or a cultivator.

For example, the operating component 106 is a cutter head which may comprise a motor head with a rotary cutting blade mounted thereon. The operating component 106 may couple to the power unit 108 to receive electrical power from the power source (AC power, DC power, battery and/or gasoline) connected to the power unit 108, such that the power tool 100 may operate as a grass trimmer. By detaching the cutter head 106 from the power unit 108 and attaching a blower fan unit 106 to the power unit 108, the power tool 100 may be transformed to operate as a blower.

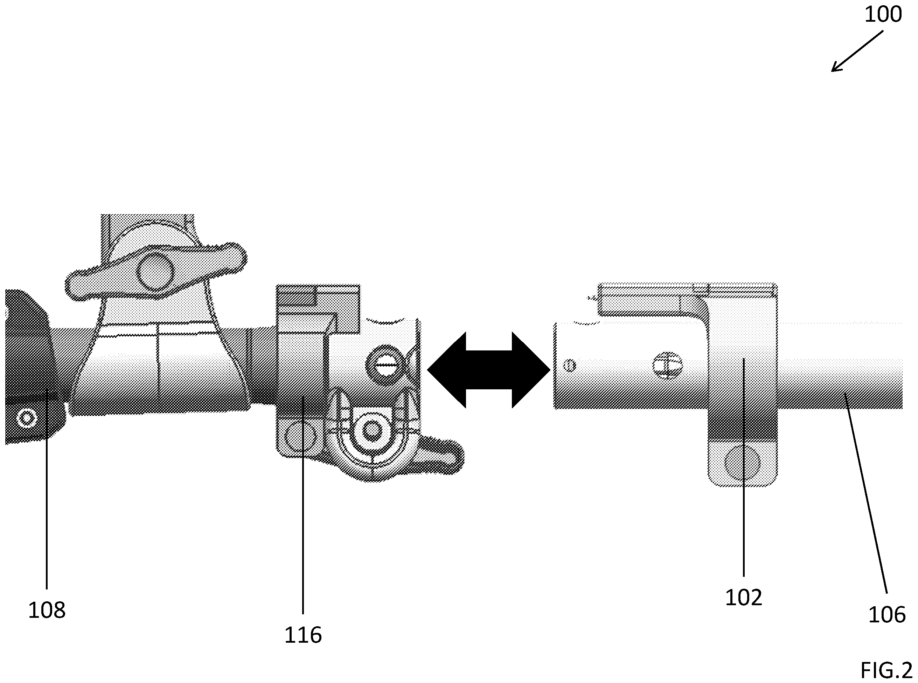

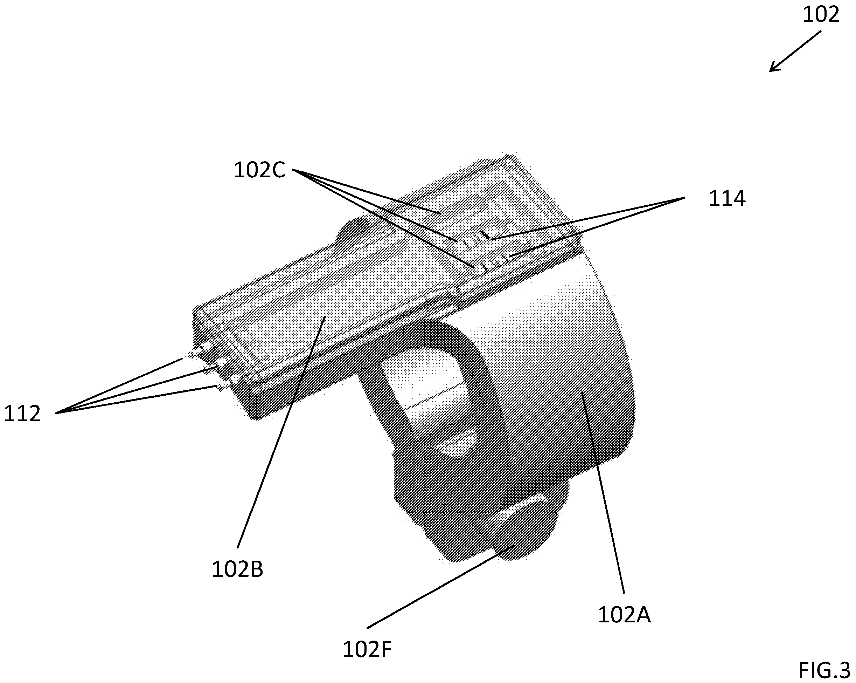

The operating component 106 may be provided with an attachment 102 for the power unit 108 to identify which type of the different operating components 106 being attached to the power unit 108. With reference to Figures 2 and 3, the attachment 102 may comprise a generally cylindrical cuff member 102A allowing the attachment 102 to be sleeved around a cylindrical portion of the operating component 106 substantially approximate to a connection end of the operating component 106. The attachment 102 may be arranged to be physically coupled to the operating component 106. For example, it may be fastened to the operating component 106 by a screw-and-bolt fastening means 102F provided on the attachment 102. Alternatively, the attachment 102 may be fastened to the operating component 106 by other fastening means as known by a person skilled in the art. In some other example embodiments, the attachment 102 is integrally form with at least a portion of the operating component 106, or the attachment 102 may comprises at least a portion of the operating component 106 or the entire operating component 106.

The attachment 102 comprises an electrical arrangement 104 associated with at least one of a plurality of operating components 106 adapted to cooperate with a power unit 108 of the power tool 100. As discussed above, the power tool 100 may be mounted with different operating components 106 such that the power tool 100 may operate as different types of gardening tools. These different operating components 106 may be provided with the electrical arrangement 104 having a number of different electrical characteristics, in which different electrical characteristics may represent different types of operating component 106 being coupled or mounted to the power unit 108.

Referring to Figure 3, the attachment 102 may comprise an attachment body 102B arranged to accommodate the electrical arrangement 104 and a plurality of connection terminals 112 arrange to electrically connect the electrical arrangement 104 to the power unit 108. The attachment body 102B may include one or more cavities 102C for the deposition of electrical components 114 and/or the necessary electrical connection wiring and connection terminals 112. For example, in an embodiment not according to the invention, the electrical components may include two resistors 114 placed in two of the three cavities 102C of the attachment body 102B. The electrical components 114 and the electrical terminals 112 may be connected in different configurations based on different detection schemes. As appreciated by a person skilled in the art, different number of resistors or electrical components, cavities, and/or electrical terminals may be implemented within the electrical arrangement 104 which may achieve different combinations and may represent different numbers of types of operating components 106 of the power tool 100.

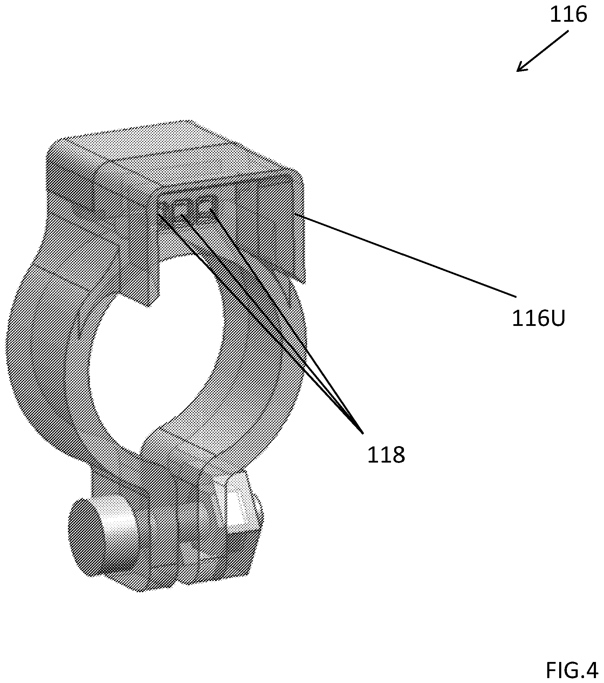

With reference to Figures 2 and 4, the power unit 108 is provided with an adaptor 116 arranged to match with the attachment 102 physically and electrically. The adaptor 116 is provided with matched number of electrical leads 118 each arranged to connect with a respective connection terminal 114 of the attachment 102 when the operating component 106 is attached to the power unit 108. The electrical leads 118 of the adaptor 116 are electrically connected to the power unit 108 such that the electrical arrangement 104 may electrically couple to the power unit 108. As such, the power unit 108 may detect the electrical arrangement 104 in the attachment 102 and may then identify which operating component 106 is attached to the power unit 108. Preferably, the adaptor may be fasten to the power unit 108 by similar fastening means for fixing the attachment 102 to the operating component 106, or it may be fastened to the power unit 108 by any means as known by a person skilled in the art.

Alternatively, the identification may be based on processing a state of each of the at least one electrical component of the electrical arrangement electrically coupled to the power unit. According to the invention, the electrical component is an electric switch, which has an on state and an off state. The power unit 108 may detect the on/off states of the electric switch when the attachment 102 is coupled to the power unit. By detecting the different combination of on/off states of the electric switch, such as two combinations of ON and OFF states in an electrical arrangement with one electric switch, or four combinations of ON-ON, ON-OFF, OFF-ON and OFF-OFF states in an electrical arrangement with two electric switch, different types of operating component 106 may be identified.

Alternatively, in an embodiment not according to the invention, the identification may be based on processing other electrical parameters (such as but not limited to a voltage level, a resistance value, a capacitance value, etc.) of each of the electrical components 114 electrically coupled to the power unit 108.

In some embodiments, the adapter 116 may be arranged to provide additional restriction to the coupling of the operating component 106 and/or an auxiliary handle 124 to the power unit 108, such that only compatible operating components 106 may be coupled to the power unit 108 and activated by the power unit 108. For example, the adapter 116 may comprises physical structures which may mate with corresponding structures provided on the attachment 102 when the compatible operating component 106 is securely and properly connected to the power unit 108. These physical structures may reject a coupling of incompatible operating components 106, auxiliary handles 124 and/or any operating components 106 without the attachment 102 provided on the operating components 106.

With reference to Figures 2 to 4, the adapter 116 includes a U-shaped protrusion 116U extending from the surface where the electrical leads 118 are positioned. The shape of the protrusion 116U substantially matches with the shape of the attachment body 102B of the attachment. Therefore the operating component 106 may be restricted from coupling to the power unit 108 if the shape of the attachment 102 does not match with the adapter 116. Alternatively, other physical structures such as guiding grooves, slots, protrusions, etc. may be provided to restrict the coupling of the operating components 106 to the power unit 108.

Alternatively or additionally, the restriction mechanism is implemented by an electrical approach, in which the power unit 108 may be operable to deliver an electrical power to an attached operating component 106 upon a determination of the operating component 106 being compatible.

In an example embodiment, a user of the power tool 100 may connect a compatible grass trimmer head 106 with the attachment 102 to a power unit 108, due to the restriction provided by the U-shaped protrusion 116U of the connector 116 on the power unit 108 and the attachment body 102B of the attachment 102 of the grass trimmer head 106, the user may only attach the grass trimmer head 106 to the power unit 108 in a proper orientation, i.e. with a portion of the attachment body inserted to the cavity defined by the U-shaped protrusion 116U and the surface of the extension pole. If the grass trimmer head 106 is not properly attached to the power unit 108, the power tool 100 may remain deactivated.

After a grass trimming operation, the user would like to perform a hedge trimming operation. The user then detaches the grass trimmer head 106 and attempts to connect an incompatible hedge trimmer head to the power unit. With the physical and/or the electrical restriction mechanism, the hedge trimmer head may not properly attached to the power unit 108 due to the mismatch of the physical structures at both connection ends, or the power unit 108 fails to detect a properly attached operating component 106. In this case the power tool 100 remains deactivated unless a compatible operating component 106 or a compatible hedge trimmer head is properly attached to the power unit 108.

With these safety measurements, the user may not have to worry about connecting incompatible units/components which may damage the power tool 100 and may cause injuries due to faulty operations.

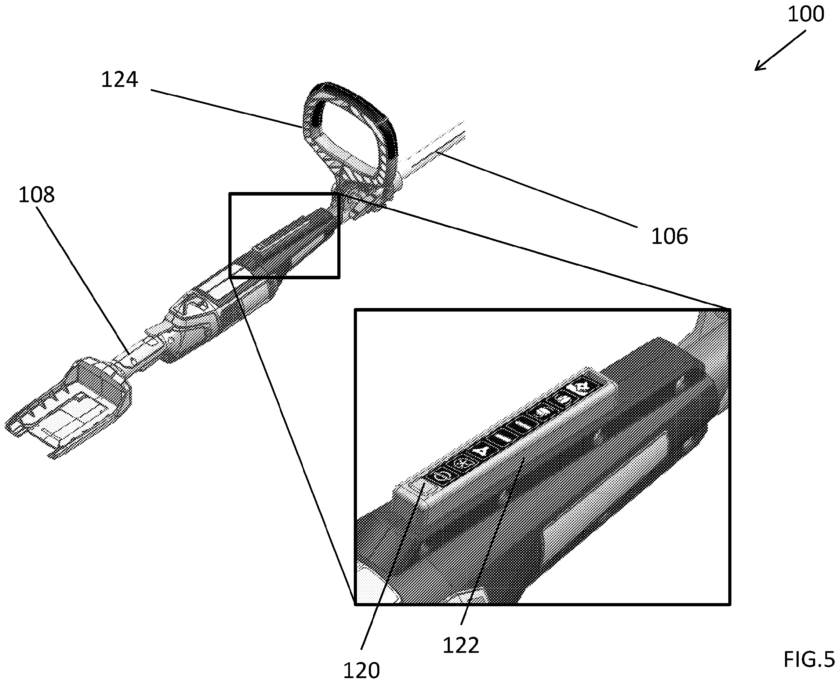

With reference to Figures 5 to 7, the power tool 100 may operate in different operation modes. Preferably, the power unit 108 may deliver an electrical power to the different operating components 106 attached to the power unit 108 according to different predetermined operating profiles. For example, the power unit 108 may include a controller unit for controlling the electrical power delivered to the operating component 106 from the battery.

Different operating components 106 may include electric motors with different sizes and/or rating and may be driven by different optimal electrical voltages/power. In addition, these operating components 106 may include different electrical loads for different operations. By obtaining an identification result based on processing the electrical arrangement 104 of the attachment 102 on the operating component 106 as discussed earlier, the power unit 108 (or the controller unit) may identify which type of operating component 106 is attached so as to select a predetermined operating profile suitable for such attached operating component 106 according to the identification result obtained.

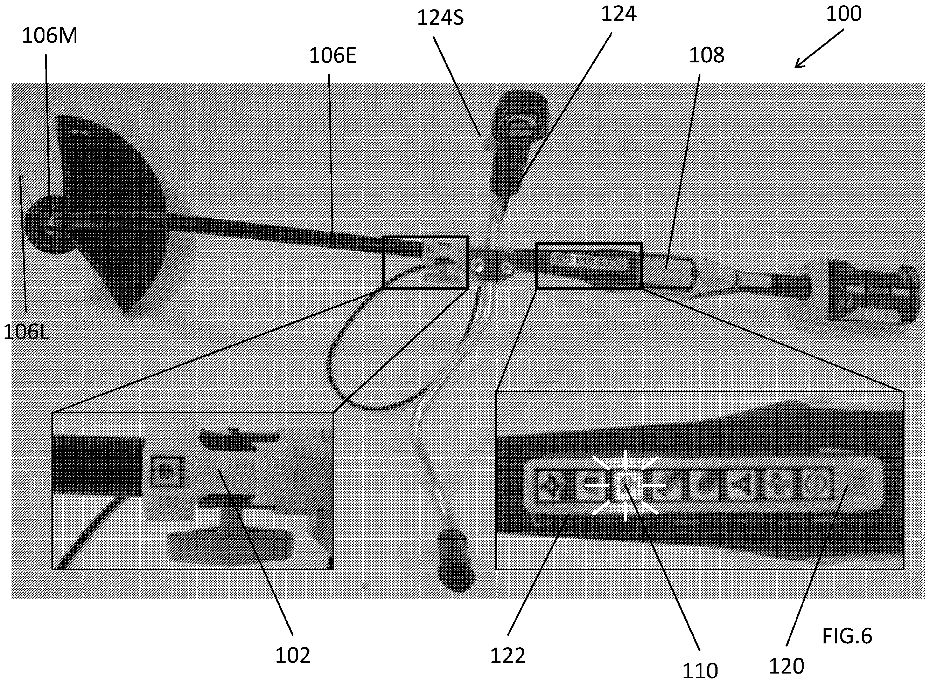

In an example embodiment as shown in Figure 6, the power tool 100 may be used as a line trimmer, in which the operating component 106 is a line trimmer head comprising an extension pole 106E, a motor 106M and a trimmer line 106L. An attachment 102 is provided at an end of the extension pole 106E such that the electrical arrangement 104 is electrically coupled to the power unit 108 when the operating component 106 is connected to the power unit 108 (or the controller unit in the power unit 108). The power unit 108 may then detect and/or process the electrical arrangement 104 provided on the operating component 106 so as to determine that the attached operating component 106 is a line trimmer head. The power unit 108 may then operable to deliver a suitable or optimal electrical power to the line trimmer head according to a line trimmer operating profile during a grass trimming operation. Optionally, a visual indication 110 may be provided to inform the user that the power unit 108 detects an attached line trimmer head automatically.

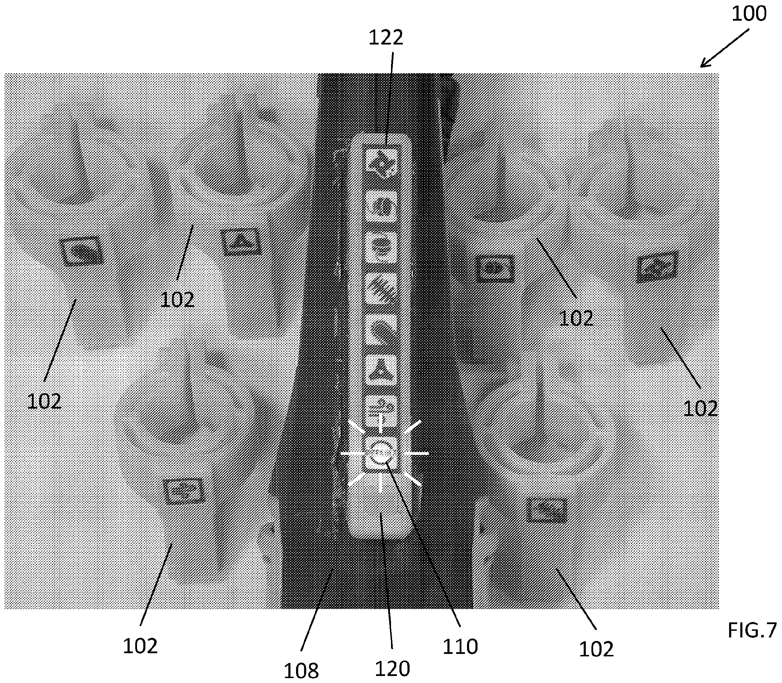

With reference to Figure 7, different attachment 102s may be attached to different operating components 106 such that the power unit 108 or the controller unit may automatically detect and identify which operating component 106 is attached to the power unit 108. The power tool 100 may also be operable in a default mode. For example the power unit 108 may be arranged to deliver an electrical power which is generally suitable for a wide range of different operating components 106. The default mode may be selected when the power unit 108 fails to detect the attachment 102 or the electrical arrangement 104 representing at least one of the known operating components 106.

Alternatively or optionally, the predetermined operating profile (including the default mode) may be manually selected by a user of the power tool 100. For example, a button 120 may be provided on the user panel 122, and the user may press the button 120 to select a desired operating profile different from the one automatically selected by the power unit 108 based on the identification result. This enables the user to override the selection provided automatically by the power unit 108.

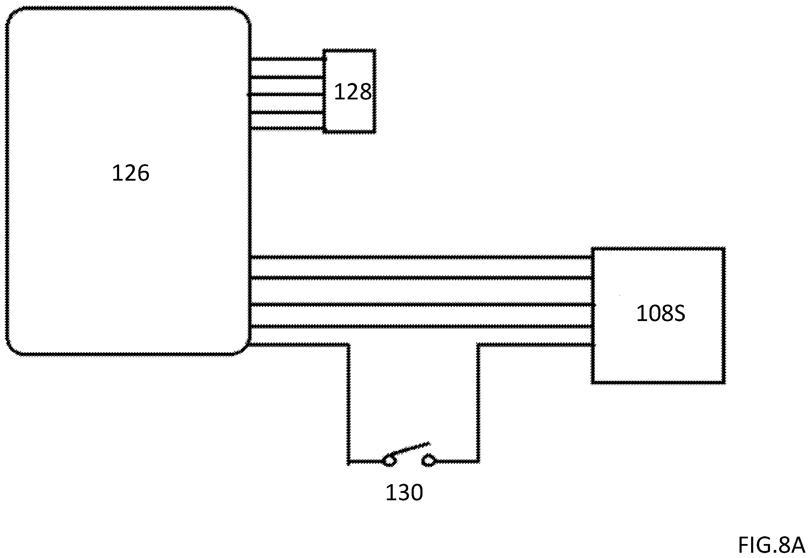

Optionally, the attachment 102 may comprises suitable electrical and/or mechanical arrangement arranged to co-operate with the power unit 108 and/or the controller unit such that the power unit 108 may then detect an auxiliary handle 124 being connected to the power unit 108. In an example embodiment as shown in Figures 8A to 8E, the power unit 108 comprises a controller unit 126 with a connector 128 for connecting an external switch 124S provided on an auxiliary handle 124 and an internal switch 108S provided on the power unit 108.

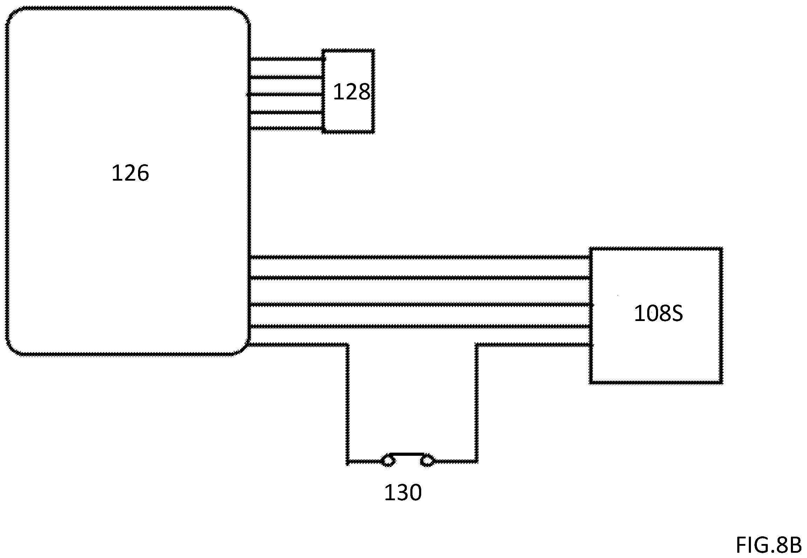

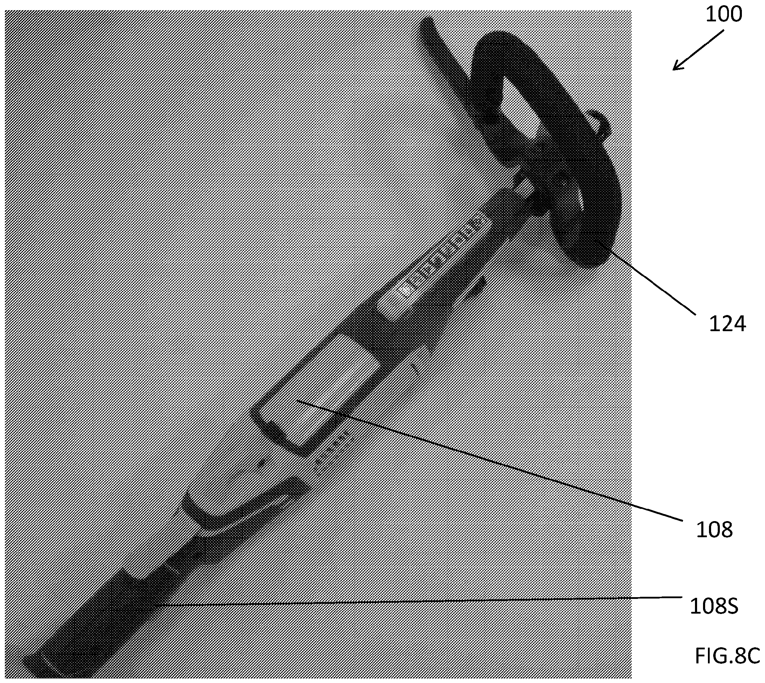

In some example embodiments, an auxiliary handle 124 may be a part of the operating component 106. With reference to Figures 8B and 8C, when the operating component 106 with the auxiliary handle 124 is connected to a power unit 108, the handle 124 may actuate a switch 130 connected to the controller unit 126, such that the power unit 108 may detect the present of the operating component 106 and/or the auxiliary handle 124. Subsequently the internal switch 108S provided on the power unit 108 is enabled such that a user may activate the operating component 106 attached to the power unit 108 by actuating the internal switch on the power unit 108. When the operating component 106 and/or the auxiliary handle 124 is removed from the power unit 108, the micro switch 130 connected to the controller unit 126 is not actuated and hence the internal switch 108S is deactivated, as shown in Figure 8A.

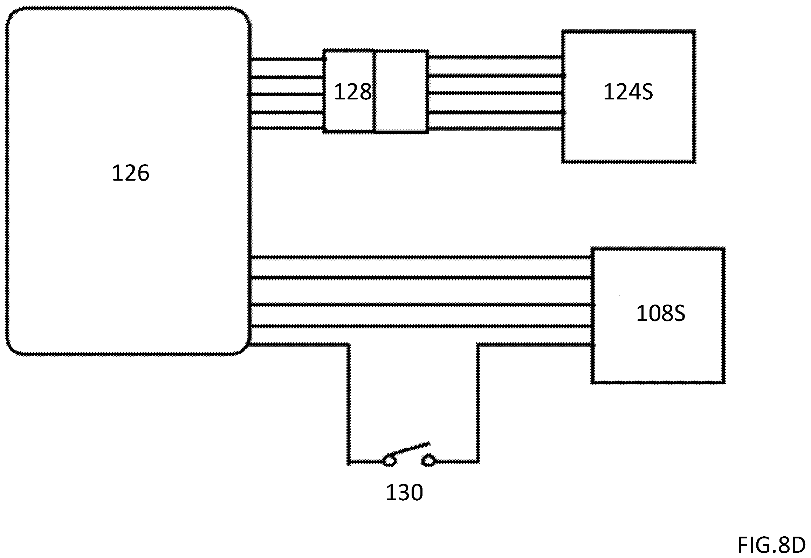

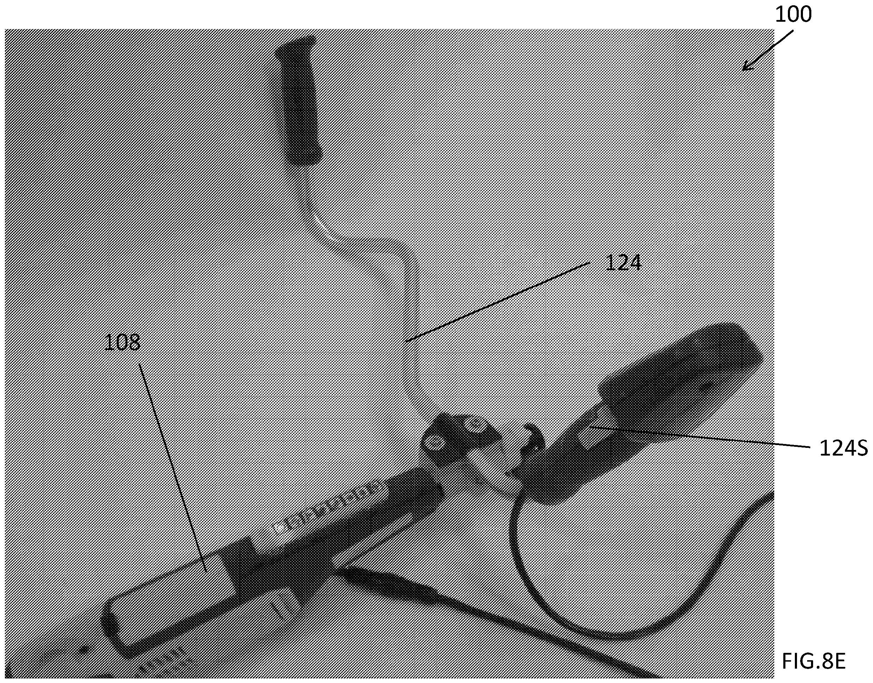

Alternatively or optionally, with reference to Figures 8D and 8E, a connector 128 may be electrically connected to the controller unit 126. An external switch 124S may be provided on the auxiliary handle 124 and/or the operating component 106, and the auxiliary switch 124S may be connected to the connector 128 such that it may electrically communicate with the controller unit 126 via the connector 128. In this configuration, the micro switch 130 may not necessary to be actuated for activating the internal switch 108S provided on the power unit 108. This configuration enables the power tool 100 to be activated by other handles or switches which may not be compatible with the smart attachment 102 mechanism. Alternatively, both the internal switch 108S on the power unit 108 and the external switch 124S provided on the auxiliary handle 124 may be simultaneously activated. Similarly, when the external switch 124S and/or the auxiliary handle 124 is disconnected from the connector 128, the power unit 108 is deactivated as shown in Figure 8A.

Alternatively, the controller may be operable to enable the internal switch 108S provided on the power unit 108 upon a detection of a predetermined operating component 106 attached to the power unit 108 without the micro switch 130 being actuated. For example, an auxiliary handle 124 may not be necessary in some handling postures, such as gripping an extension pole of the power tool 100, or the power tool 100 may be handled by a single hand. Optionally, the controller may also be implemented with a default mode which allows the internal switch 108S always activated when an operating component 106 is attached to the power unit 108.

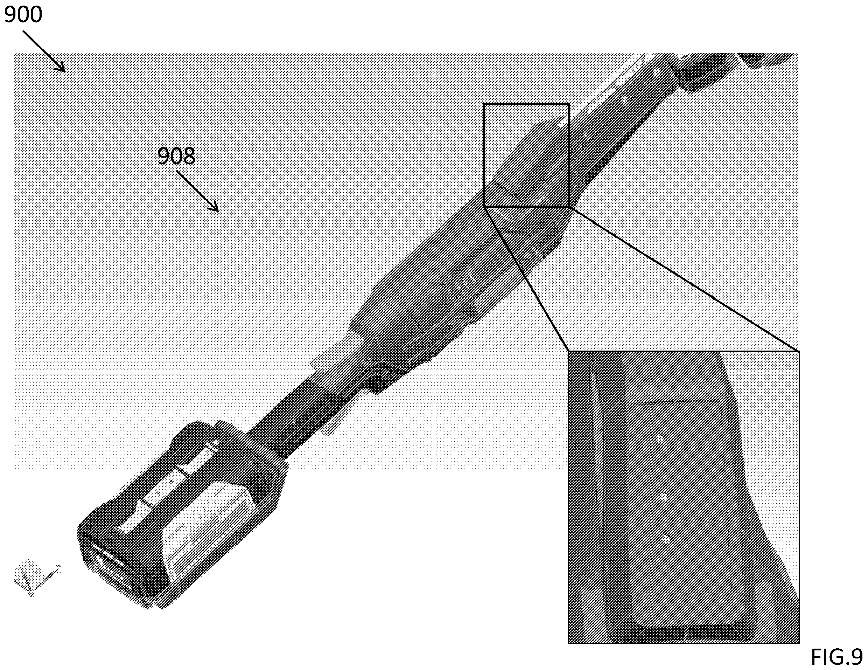

With reference to Figure 9, there is shown an alternative embodiment of a power tool 900 comprising an attachment 902 having an electrical arrangement 904 associated with at least one of a plurality of operating components 906 adapted to cooperate with a power unit 908 of the power tool 900, wherein the power unit 908 is arranged to detect the electrical arrangement 904 so as to identify the at least one of the plurality of operating components 906 attached thereto.

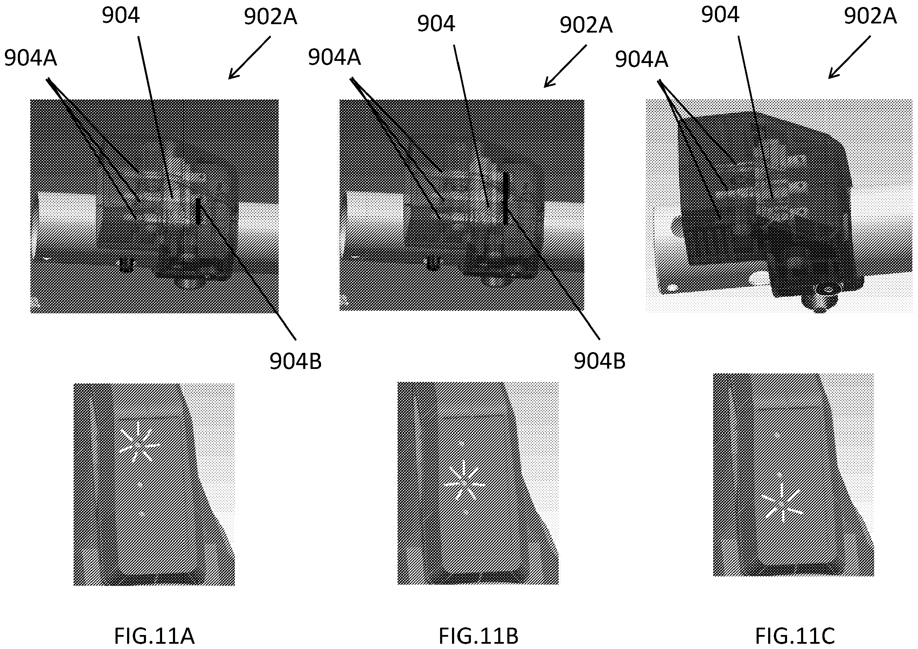

In this embodiment, the power tool 900 is similar to the aforementioned power tool 100, which may be operable in different modes when different operating components 906 are connected to the power unit 908. Some of the different operating components 906 may operate with similar or identical operation profiles, therefore the power unit may be simplified to operate with fewer operation modes, such as three different modes as shown in the Figures 9 and 11A to 11C.

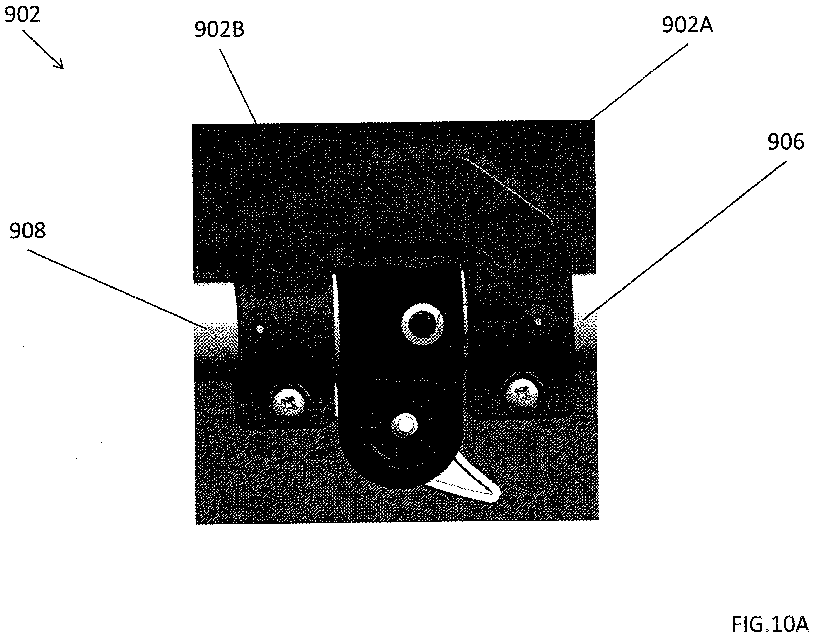

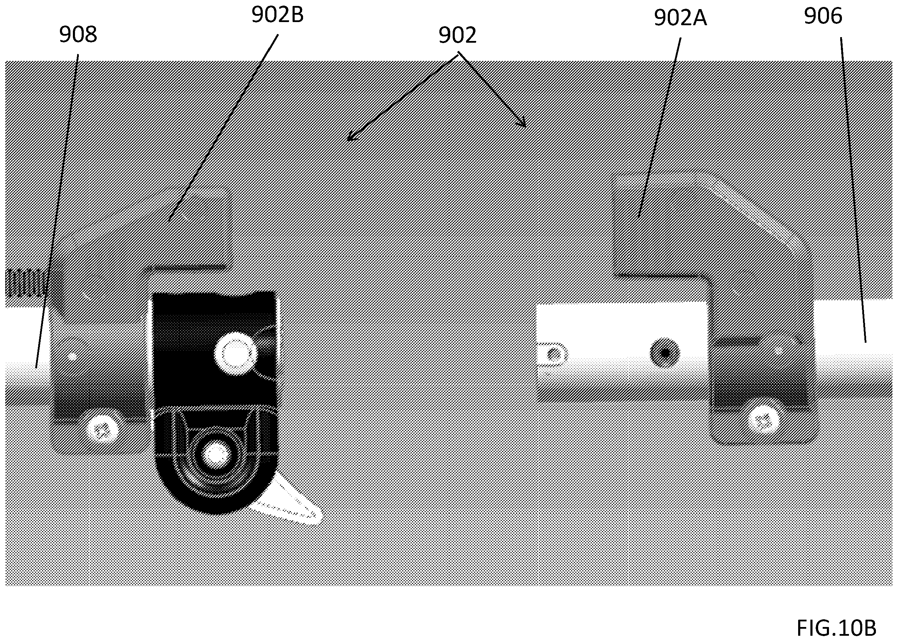

Similar to the previous examples, the operating component 906 may be provided with an attachment 902 for the power unit 908 to identify which type of the different operating components 906 being attached to the power unit 908. With reference to Figures 10A and 10B, the attachment 902 may include a female connector 902A and a male connector 902B provided at the connection portions of the operating component 906 and the power unit 908 respectively. The male and female connectors may connect when the operating component 906 is properly fixed or secured to the power unit 908.

With reference to Figures 11A to 11C, the female connector 902A is provided with the electrical arrangement 904. In this example, the electrical arrangement 904 includes a plurality of electrical leads 904A which may be selectively connected with interconnects 904B. Preferably, the female connector 902A may be fixed on the connecting end of the operating component 906, such that differently configured electrical arrangement 904 may be arranged to represent different types or groups of operating components 906. The electrical arrangement 904 may be detected by the power unit 908 when the male connector 902B on the power unit 908 and the female connector 902A on the operating component 906 mate together.

In an example embodiment, an operation profile of a grass trimmer may be similar to that of a hedge trimmer, such that these two operating components may be provided with a same electrical arrangement 904 in the attachment 902. With reference to Figure 11A, two of the three electrical leads 904A are connected to represent a first type or group of operating components which may include a hedge trimmer blade and a grass trimmer head.

In another example as shown in Figure 11B, all three electrical leads 904A are connected to represent a second group of operating components which may include a chain saw blade and a blower fan. In yet another example as shown in Figure 11C, none of the electrical leads 904A are connected to each other, and the power tool 900 may operate in a default operation mode.

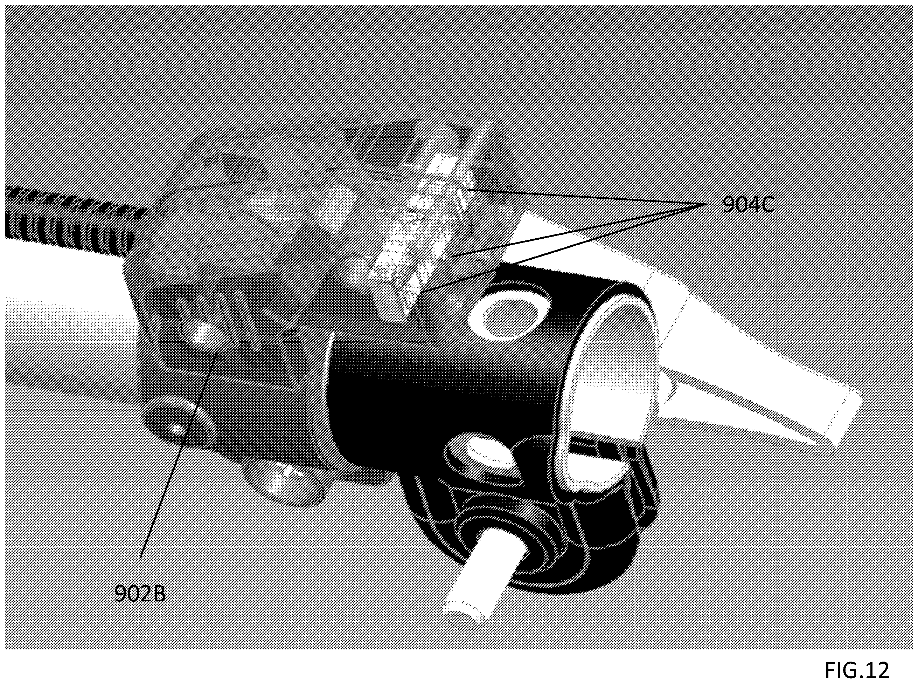

With reference to Figure 12, the male connector 902B of the arrangement 902 comprises a set of electrical connectors 904C corresponding to the electrical leads 904A. The electrical connectors 904C in the male connector 902B are arranged to connect with the respective electrical leads 904A in the female connector 902A when the male connector 902B on the power unit 908 and the female connector 902A on the operating component 906 mate together. The electrical connectors 904C are also connected to the controller unit 926 of the power unit 908 so as to allow the controller to detect the electrical configuration of the electrical leads 904A through the electrical connectors 904C.

It should be appreciated by a skilled person that the positions of the male/female connectors and/or the electrical leads/connectors in the above examples may be switched in different alternative embodiments.

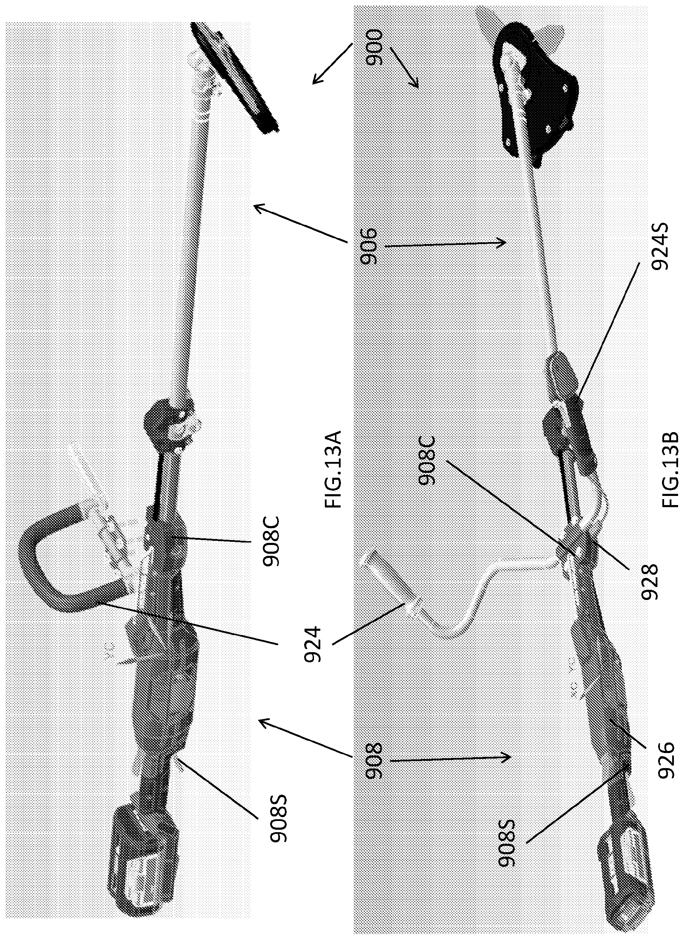

With reference to Figures 13A and 13B, the power tool 900 may be provided with an auxiliary handle 924 such that a user may grasp the handle when operating or holding the power tool 900. Similar to the examples as shown in Figures 8A to 8E, different auxiliary handles 924 may be selectively attached to the power tool 900. In addition, an external switch 924S may be provided on the auxiliary handle 924 such that a user may control the power tool 900 with the external switch 924S. Similarly, the auxiliary switch 924S may be connected to the connector 928 such that it may electrically communicate with the controller unit 926 via the connector 928.

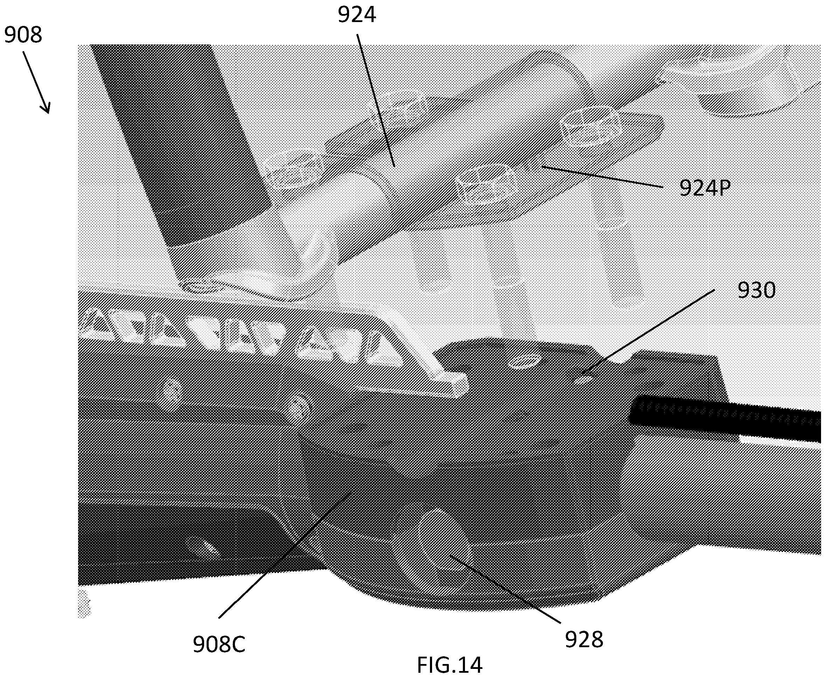

With reference to Figure 14, the power unit 908 may be provided with a handle connector 908C arranged to receive and secure the auxiliary handle 924. A micro switch 930 may be provided in the handle connector 908C and the micro switch 930 is arranged to be actuated by a protrusion 924P on certain type of auxiliary handle 924. In this example, the power tool 900 may be operated by the internal switches 908S in the power unit 908 when the micro switch 930 is actuated by the protrusion 924P of the mounted auxiliary handle 924 such as the auxiliary handle 924 as shown in Figure 13A.

Optionally, the handle connector 908C may further comprise a connector 928 arrange to connect the auxiliary switch 924S provided on an auxiliary handle 924 such as a bike handle as shown in Figure 13B. In this example, the micro switch 930 of the handle connector 908C is not actuated and thus the internal switch 908S of the power unit 908 is disabled. Alternatively, such protrusion 924P may be provided on the bike handle for actuating the micro switch 930 when the handle 924 is mounted on the handle connector 908C such that both the internal switches 908S and the auxiliary switch 924S may be used for controlling the power tool 900.

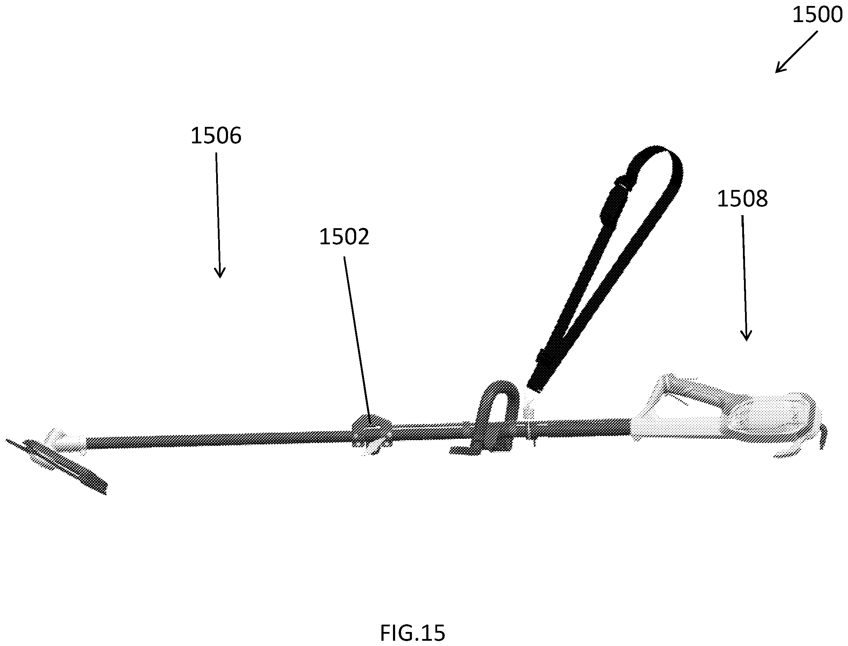

With reference to Figure 15, there is provided a power tool 1500 comprising an attachment 1502 having an electrical arrangement associated with at least one of a plurality of operating components 1506 adapted to cooperate with a power unit 1508 of the power tool 1500, wherein the power unit 1508 is arranged to detect the electrical arrangement so as to identify the at least one of the plurality of operating components 1506 attached thereto. The only difference is that the power tool 1500 is AC-powered. It should be appreciated by a skilled person that any features and/or functions as described in the previous embodiments may be implemented in such AC-powered tool 1500 without departing from the scope of the invention as defined by the claims.

These embodiments are advantageous in that the attachment enable smart detection of different compatible operating component attached to a power unit, and the user may operate the power tool with an operation profile most suitable for the attached operating component without the manually selecting the type of operating components or the operation profile.

Advantageously, the attachment includes a simple structure and the configuration may support any possible number of identification of different operating components. For example, in an embodiment not according to the invention, the controller may at least detect 8 different combinations of 0 - 3 identical resistors each being placed in the attachment body, and the number of identification may be scale up or down simply by changing the maximum number of resistors and the different resistance values based on different detection schemes.

The attachment may also enable the detection or identification of an auxiliary handle attached to the power unit such that the main switch on the power unit and/or the auxiliary switch on the auxiliary handle may be activated or deactivated automatically. This ensures that the power tool may be safely operated only when appropriate auxiliary handles and/or operating components are properly attached and secured to the power unit.

These embodiments are also advantageous in that only compatible operating components and/or auxiliary handles may be attached to the power unit, such that both the power unit and the operating components may be protected from faulty operations. This may also enhance the protection for a user of the power tool from injuries caused by an operation of incompatible power units, operating components and/or auxiliary handles.

Although these embodiments are generally related to gardening tools, such as a hedge trimmer, a line trimmer, an edger, a brush cutter, a pruner, a blower or a cultivator. The invention may also be applied to any types of gardening tools or power tool such as a chainsaw, an electric saw, an electric driver, an electric drill, etc. The power tool may be powered by any power source such as but not limited to an AC/DC power source, a battery, or fuel.

It will be appreciated by persons skilled in the art that numerous variations and/or modifications may be made to the invention as shown in the specific embodiments without departing from the scope of the invention as defined by the claims. The present embodiments are, therefore, to be considered in all respects as illustrative and not restrictive.

Any reference to prior art contained herein is not to be taken as an admission that the information is common general knowledge, unless otherwise indicated.

## Claims

1. An attachment (102; 902; 1502) for a power tool (100; 900; 1500), comprising: an electrical arrangement (104; 904) associated with at least one of a plurality of operating components (106; 906; 1506) adapted to cooperate with a power unit (108; 908; 1508) of the power tool (100; 900; 1500), wherein the electrical arrangement (104; 904), when electrically coupled to the power unit, is arranged to be detected by the power unit so as to enable the power unit to identify the at least one of the plurality of operating components (106; 906; 1506) attached to the power unit; wherein the electrical arrangement (104; 904) comprises at least one electrical component;
**characterized in that** the at least one electrical component includes at least one electric switch.

2. The attachment (102; 902; 1502) of claim 1, wherein the electrical arrangement (104; 904) comprises at least two electric switches.

3. The attachment (102; 902; 1502) of claim 1 or 2, further comprising a plurality of connection terminals (112) arranged to electrically connect the electrical arrangement (104; 904) to the power unit.

4. The attachment (102; 902; 1502) of any one of the preceding claims, further comprising an attachment body (102B) arranged to accommodate the electrical arrangement (104; 904) .

5. The attachment (102; 902; 1502) of any one of the preceding claims, wherein the attachment further comprises a generally-cylindrical cuff member (102A) arranged to sleeve around a cylindrical portion of the operating component (106; 906; 1506) substantially approximate to a connection end of the operating component (106; 906; 1506).

6. The attachment (102; 902; 1502) of any one of the preceding claims, wherein the electrical arrangement (104; 904) has an electrical characteristic that represents a type of the operating component (106; 906; 1506).

7. An operating component (106; 906; 1506) of a power tool (100; 900; 1500), comprising the attachment (102; 902; 1502) of any one of the preceding claims.

8. The operating component (106; 906; 1506) of claim 7, wherein the attachment (102; 902; 1502) is integrally form with at least a portion of the operating component (106; 906; 1506).

9. A power tool (100; 900; 1500) comprising:
a power unit arranged to be selectively and detachably attached with a plurality of operating components (106; 906; 1506); and
an operating component (106; 906; 1506) of claim 7 or 8, being one of the plurality of operating components (106; 906; 1506).

10. The power tool (100; 900; 1500) of claim 9, further comprising a further operating component (106; 906; 1506) of claim 7 or 8, being another one of the plurality of operating components (106; 906; 1506), wherein the operating component (106; 906; 1506) and the further operating component (106; 906; 1506) are different types of operating components (106; 906; 1506).

11. The power tool (100; 900; 1500) of claim 9 or 10, wherein the power unit comprises an adaptor (116) arranged to match with the respective attachment both physically and electrically.

12. The power tool (100; 900; 1500) of any one of claims 9 to 11, further comprising a controller unit for controlling the electrical power delivered to the operating component (106; 906; 1506) according to at least one predetermined operating profile.

13. The power tool (100; 900; 1500) of any one of claims 9 to 12, wherein the controller unit is arranged to identify the type of operating component (106; 906; 1506) attached to the power unit and select, based on the identification, a predetermined operating profile suitable for the attached operating component (106; 906; 1506).

14. The power tool (100; 900; 1500) of any one of claims 9 to 13, further comprising a user panel (122) with a button (120) that allows a user to manually select an operating profile different from the operating profile automatically selected by the controller unit based on the identification.

15. The power tool (100; 900; 1500) of any one of claims 9 to 14, wherein the power tool is an electrical gardening tool; and the operating component (106; 906; 1506) is an operating component of a hedge trimmer, a line trimmer, an edger, a brush cutter, a pruner, a blower, or a cultivator.

## Patentansprüche

1. Aufsatz (102; 902; 1502) für ein Elektrowerkzeug (100; 900; 1500), der eine elektrische Anordnung (104; 904) umfasst, die wenigstens einer von mehreren Funktionskomponenten (106; 906; 1506) zugeordnet ist, die zum Zusammenwirken mit einer Stromversorgungs-Einheit (108; 908; 1508) des Elektrowerkzeugs (100; 900; 1500) ausgeführt sind, wobei die elektrische Anordnung (104; 904) so eingerichtet ist, dass sie, wenn sie elektrisch mit der Stromversorgungs-Einheit gekoppelt ist, von der Stromversorgungs-Einheit erfasst wird, um die Stromversorgungs-Einheit in die Lage zu versetzen, die wenigstens eine der Vielzahl von Funktionskomponenten (106; 906; 1506) zu identifizieren, die an der Stromversorgungs-Einheit angebracht ist, und die elektrische Anordnung (104; 904) wenigstens eine elektrische Komponente umfasst; **dadurch gekennzeichnet, dass** die wenigstens eine elektrische Komponente wenigstens einen elektrischen Schalter umfasst.

2. Aufsatz (102; 902; 1502) nach Anspruch 1, wobei die elektrische Anordnung (104; 904) wenigstens zwei elektrische Schalter umfasst.

3. Aufsatz (102; 902; 1502) nach Anspruch 1 oder 2, die des Weiteren eine Vielzahl von Verbindungsanschlüssen (112) umfasst, die so eingerichtet sind, dass sie die elektrische Anordnung (104; 904) elektrisch mit der Stromversorgungs-Einheit verbinden.

4. Aufsatz (102; 902; 1502) nach einem der vorangehenden Ansprüche, der des Weiteren einen Aufsatz-Körper (102B) umfasst, der so eingerichtet ist, dass er die elektrische Anordnung (104; 904) aufnimmt.

5. Aufsatz (102; 902; 1502) nach einem der vorangehenden Ansprüche, wobei der Aufsatz des Weiteren ein Im Allgemeinen zylindrisches Manschetten-Element (102A) umfasst, das so eingerichtet ist, dass es einen zylindrischen Abschnitt der Funktionskomponente (106; 906; 1506) im Wesentlichen in der Nähe eines Verbindungsendes der Funktionskomponente (106; 906; 1506) umschließt.

6. Aufsatz (102; 902; 1502) nach einem der vorangehenden Ansprüche, wobei die elektrische Anordnung (104; 904) eine elektrische Charakteristik hat, die einen Typ der Funktionskomponente (106; 906; 1506) repräsentiert.

7. Funktionskomponente (106; 906; 1506) eines Elektrowerkzeugs (100; 900; 1500), die den Aufsatz (102; 902; 1502) nach einem der vorangehenden Ansprüche umfasst.

8. Funktionskomponente (106; 906; 1506) nach Anspruch 7, wobei der Aufsatz (102; 902; 1502) integral mit wenigstens einem Abschnitt der Funktionskomponente (106; 906; 1506) ausgebildet ist.

9. Elektrowerkzeug (100; 900; 1500), das umfasst:
eine Stromversorgungs-Einheit, die so eingerichtet ist, dass daran selektiv und abnehmbar eine Vielzahl von Funktionskomponenten (106; 906; 1506) angebracht wird; und
eine Funktionskomponente (106; 906; 1506) nach Anspruch 7 oder 8, die eine der Vielzahl von Funktionskomponenten (106; 906; 1506) ist.

10. Elektrowerkzeug (100; 900; 1500) nach Anspruch 9, das des Weiteren eine weitere Funktionskomponente (106; 906; 1506) nach Anspruch 7 oder 8 umfasst, die eine andere der Vielzahl von Funktionskomponenten (106; 906; 1506) ist, wobei die Funktionskomponente (106; 906; 1506) und die weitere Funktionskomponente (106; 906; 1506) verschiedene Typen von Funktionskomponenten (106; 906; 1506) sind.

11. Elektrowerkzeug (100; 900; 1500) nach Anspruch 9 oder 10, wobei die Stromversorgungs-Einheit einen Adapter (116) umfasst, der so eingerichtet ist, dass er sowohl physisch als auch elektrisch an den jeweiligen Aufsatz angepasst ist.

12. Elektrowerkzeug (100; 900; 1500) nach einem der Ansprüche 9 bis 11, das des Weiteren eine Steuerungs-Einheit umfasst, mit der die an die Funktionskomponente (106; 906; 1506) abgegebene elektrische Energie gemäß wenigstens einem vorgegebenen Funktionsprofil gesteuert wird.

13. Elektrowerkzeug (100; 900; 1500) nach einem der Ansprüche 9 bis 12, wobei die Steuerungs-Einheit so eingerichtet ist, dass sie den Typ der an der Stromversorgungs-Einheit angebrachten Funktionskomponente (106; 906; 1506) identifiziert und auf Basis der Identifizierung ein vorgegebenes Funktionsprofil auswählt, das für die angebrachte Funktionskomponente (106; 906; 1506) geeignet ist.

14. Elektrowerkzeug (100; 900; 1500) nach einem der Ansprüche 9 bis 13, das des Weiteren ein Bedienfeld (122) mit einem Knopf (120) umfasst, der es einem Benutzer ermöglicht, manuell ein Funktionsprofil auszuwählen, das sich von dem Funktionsprofil unterscheidet, das von der Steuerungs-Einheit auf Basis der Identifizierung automatisch ausgewählt wird.

15. Elektrowerkzeug (100; 900; 1500) nach einem der Ansprüche 9 bis 14, wobei das Elektrowerkzeug ein elektrisches Gartengerät ist und die Funktionskomponente (106; 906; 1506) eine Funktionskomponente einer Heckenschere, eines Rasentrimmers, eines Kantentrimmers, einer Motorsense, einer Baumschere, eines Gebläses oder eines Vertikulierers ist.

## Revendications

1. Fixation (102 ; 902 ; 1502) pour outil électrique (100 ; 900 ; 1500), comprenant : un agencement électrique (104 ; 904) associé à au moins un composant parmi une pluralité de composants fonctionnels (106 ; 906 ; 1506) adaptés pour coopérer avec une unité d'alimentation (108 ; 908 ; 1508) de l'outil électrique (100 ; 900 ; 1500), dans laquelle l'agencement électrique (104 ; 904), lorsqu'il est couplé électriquement à l'unité d'alimentation, est agencé pour être détecté par l'unité d'alimentation de manière à permettre à l'unité d'alimentation d'identifier ledit au moins un composant parmi la pluralité de composants fonctionnels (106 ; 906 ; 1506) qui est fixé à l'unité d'alimentation ; dans laquelle l'agencement électrique (104 ; 904) comprend au moins un composant électrique ;
**caractérisée en ce que** ledit au moins un composant électrique comprend au moins un commutateur électrique.

2. Fixation (102 ; 902 ; 1502) selon la revendication 1, dans laquelle l'agencement électrique (104 ; 904) comprend au moins deux commutateurs électriques.

3. Fixation (102 ; 902 ; 1502) selon la revendication 1 ou 2, comprenant en outre une pluralité de bornes de connexion (112) agencées pour connecter électriquement l'agencement électrique (104 ; 904) à l'unité d'alimentation.

4. Fixation (102 ; 902 ; 1502) selon l'une quelconque des revendications précédentes, comprenant en outre un corps de fixation (102B) agencé pour loger l'agencement électrique (104 ; 904).

5. Fixation (102 ; 902 ; 1502) selon l'une quelconque des revendications précédentes, dans laquelle la fixation comprend en outre un élément de manchette généralement cylindrique (102A) agencé pour s'emmancher autour d'une portion cylindrique du composant fonctionnel (106 ; 906 ; 1506) substantiellement proche d'une extrémité de connexion du composant fonctionnel (106 ; 906 ; 1506).

6. Fixation (102 ; 902 ; 1502) selon l'une quelconque des revendications précédentes, dans laquelle l'agencement électrique (104 ; 904) présente une caractéristique électrique qui représente un type de composant fonctionnel (106 ; 906 ; 1506).

7. Composant fonctionnel (106 ; 906 ; 1506) d'un outil électrique (100 ; 900 ; 1500), comprenant la fixation (102 ; 902 ; 1502) selon l'une quelconque des revendications précédentes.

8. Composant fonctionnel (106 ; 906 ; 1506) selon la revendication 7, dans lequel la fixation (102 ; 902 ; 1502) est formée intégralement avec au moins une portion du composant fonctionnel (106 ; 906 ; 1506).

9. Outil électrique (100 ; 900 ; 1500) comprenant :
une unité d'alimentation agencée pour être fixée de manière sélective et détachable à une pluralité de composants fonctionnels (106 ; 906 ; 1506) ; et
un composant fonctionnel (106 ; 906 ; 1506) selon la revendication 7 ou 8, qui est un composant de la pluralité de composants fonctionnels (106 ; 906 ; 1506).

10. Outil électrique (100 ; 900 ; 1500) selon la revendication 9, comprenant en outre un composant fonctionnel additionnel (106 ; 906 ; 1506) selon la revendication 7 ou 8, qui est un autre composant de la pluralité de composants fonctionnels (106 ; 906 ; 1506), dans lequel le composant fonctionnel (106 ; 906 ; 1506) et ledit composant fonctionnel additionnel (106 ; 906 ; 1506) sont des composants fonctionnels de types différents (106 ; 906 ; 1506).

11. Outil électrique (100 ; 900 ; 1500) selon la revendication 9 ou 10, dans lequel l'unité d'alimentation comprend un adaptateur (116) agencé pour correspondre aussi bien physiquement qu'électriquement à la fixation respective.

12. Outil électrique (100 ; 900 ; 1500) selon l'une quelconque des revendications 9 à 11, comprenant en outre une unité de contrôle pour contrôler l'énergie électrique fournie au composant fonctionnel (106 ; 906 ; 1506) conformément à au moins un profil de fonctionnement prédéterminé.

13. Outil électrique (100 ; 900 ; 1500) selon l'une quelconque des revendications 9 à 12, dans lequel l'unité de contrôle est agencée pour identifier le type du composant fonctionnel (106 ; 906 ; 1506) fixé à l'unité d'alimentation et pour sélectionner, sur base de l'identification, un profil de fonctionnement prédéterminé adapté pour le composant fonctionnel fixé (106 ; 906 ; 1506).

14. Outil électrique (100 ; 900 ; 1500) selon l'une quelconque des revendications 9 à 13, comprenant en outre un panneau d'utilisateur (122) avec un bouton (120) qui permet à un utilisateur de sélectionner manuellement un profil de fonctionnement différent du profil de fonctionnement sélectionné automatiquement par l'unité de contrôle sur base de l'identification.

15. Outil électrique (100 ; 900 ; 1500) selon l'une quelconque des revendications 9 à 14, dans lequel l'outil électrique est un outil électrique de jardinage ; et le composant fonctionnel (106 ; 906 ; 1506) est un composant fonctionnel d'un taille-haie, d'un coupe-bordure, d'une déligneuse, d'une débroussailleuse, d'un sécateur, d'un souffleur ou d'un cultivateur.
